# EUROPEAN PATENT SPECIFICATION

(11) **EP 3 960 355 B1**
(45) Date of publication and mention of the grant of the patent: **12.02.2025**
(21) Application number: 21188247.7
(22) Date of filing: 28.07.2021
(51) Int. Cl.: B23K 9/32, B23K 9/10, B23K 9/095, G06F 1/16, B23Q 1/00, B23K 9/12

(54) **WELDING WIRE FEEDER WITH ADAPTABLE USER INTERFACE**
SCHWEISSDRAHTZUFÜHRVORRICHTUNG MIT EINER ANPASSBAREN BENUTZERSCHNITTSTELLE
DISTRIBUTEUR DE FIL DE SOUDAGE AVEC UNE INTERFACE UTILISATEUR ADAPTABLE

(30) Priority: 31.07.2020 US 202063059717 P; 12.07.2021 US 202117372846
(43) Date of publication of application: 02.03.2022
(73) Proprietor: Illinois Tool Works Inc., Glenview, IL 60025 (US)
(72) Inventor: MORTENSEN, Daniel J., Glenview 60025 (US); UITENBROEK, Connor D., Glenview 60025 (US); SCHMITZ, Adam R., Glenview 60025 (US)
(74) Representative: HGF

(56) References cited:
- EP-A2- 0 895 826
- WO-A2-2015/145391
- CN-U- 210 549 495
- JP-A- 2001 191 381
- JP-A- 2008 272 872
- JP-U- S61 205 729
- KR-A- 20050 063 073
- KR-Y1- 200 361 395
- US-A1- 2015 041 447

## Description

The present invention relates to a wire feeder according to the preamble of claim 1 (see for example KR 200 361 395 Y).

In some welding applications, a welding wire feeder may be used to feed welding wire from a wire spool to a welding torch for a welding operation. In some welding operations, it may be desirable for welding wire feeders to be portable. Benefits of a portable wire feeder include being able to locate the wire feeder at work area. However, as an operator moves around the work area, a control or display on the wire feeder may become difficult to read and/or reach. In some welding operations, it may be desirable to employ a wire feeder with an adaptable control or display to accommodate the work area.

### SUMMARY

The present invention defines a wire feeder according to claim 1.

Further preferred embodiments of the present invention are defined in the dependent claims.

### DRAWINGS

These and other features, aspects, and advantages of the present invention will become better understood when the following detailed description is read with reference to the accompanying drawings in which like characters represent like parts throughout the drawings, wherein:
FIG. 1 illustrates an example welding system employing a wire feeder and a wire feeder source.
FIGS. 2A to 2D illustrate perspective views of an example wire feeder with an adaptable user interface.
FIGS. 3A to 3C illustrate additional perspective views of an example wire feeder with an adaptable user interface.
FIGS. 4A to 4D illustrate additional views of an example wire feeder with an adaptable user interface.
FIGS. 5A to 5C illustrate perspective views of an example wire feeder with an adaptable user interface mounted within an enclosure.

The figures are not necessarily to scale. Where appropriate, similar or identical reference numbers are used to refer to similar or identical components.

### DETAILED DESCRIPTION

Disclosed are welding systems having one or more adaptable user interfaces, generally. In particular, welding wire feeder systems are equipped with one or more user interfaces adaptable to change position, orientation, or location, relative to a housing or support on which the user interface is secured. The adaptable user interfaces is secured to a mount (e.g., an enclosure, a case, a surface, etc.) via one or more fasteners (e.g., screws, bolts, magnets, straps, snap-fit, detents, pins, etc.). The fasteners create a non-permanent joint between the user interface and the mount, such that the position, orientation, or location user interface can be adapted for a desired application.

Conventional welding systems have control panels and/or user interfaces mounted to the housing in a fixed position. Typically, the panels and/or interfaces are facing forward, such as on a front panel with input/output receptacles, with the expectation that the operator will return to the front panel to perform multiple tasks. However, by the very nature of welding, in particular during use of a portable wire feeder, the operator may move around the work area and may not have a single view of the front panel of the welding system.

Additionally or alternatively, by use of a remote and/or system with an automatic setting feature, the operator may not need to return to the welding power supply and/or wire feeder to perform many common tasks (e.g., adjust welding parameter settings, such as when switching between an arc welding process and a gouging process). Thus, the operator may desire to view the user interface (or access a control on the user interface) from multiple angles.

In an example, a wire feeder may be placed on a cart, along with a spool of wire, tools, etc. If the user interface was in a fixed orientation, the operator must be in a position to clearly see the front panel of the wire feeder. However, if the operator is performing a weld above or below a line of sight of the front panel, the operator would have to leave the work space in order to view and/or access the user interface.

Disclosed adaptable user interfaces are configured to change position, orientation, or location, relative to a housing or support on which the user interface is secured. The user interface may include a display screen and/or controls. Such a display and/or controls may be adaptable to changes in arrangement of the welding system. In some examples, two or more surfaces of the welding system includes such a display and controls. In some examples, the system operational parameters can be displayed and/or controlled from one or more of a plurality of user interfaces arranged on two or more surfaces of the welding system. When the welding system is in a first orientation (arranged vertically), a first display and first set of controls are active, whereas in second orientation (arranged horizontally), a second display and second set of controls are active. Activation of the first or second displays and/or controls can be implemented automatically (e.g., in response to an orientation sensor, a placement sensor, etc.) and/or an operator input (e.g., selection of a particular set of displays/controls). In some examples, the user interface employs a configurable display (which may change orientation of displayed text and/or graphics in response to an adjustment in position, orientation, location, etc.), one or more physical controls (e.g., knobs, switches, membrane switches, etc.), and/or touch screen enabled controls.

In securing the adaptable user interfaces to the housing (e.g., via a mount) a manually adjustable fastener may be employed (e.g., without the use of tools, such as by hand-tightened screws, bolts, magnets, straps, snap-fit, detents, removable pins, etc.). In some examples, a detent is a mechanical or magnetic device configured to resist or arrest the rotation of the user interface about a pivot point. Such a device can include a variety of fasteners, as disclosed herein. Additionally or alternatively, a fastener may employ one or more tools to change the position.

In some examples, the movement or rotation of the user interface is unrestricted, such that the user interface may move 360 degrees about the pivot point, may move in one or more degrees of freedom, and/or be removable (e.g., yet maintain a power and/or data connection, by wired and/or wireless connection). For example, a given mount may be able to secure the user interface in a variety of positions, orientations, or locations. In some examples, the housing of the welding system may include multiple mounts configured to receive the user interface, such that the user interface may be removed from a first mount (e.g., with an obstructed view) and secured in a second mount (e.g., with an unobstructed view). In some examples, the user interface comprises a tether or adjustable fastening system (e.g., straps, ties, magnets, etc.), such that an operator may remove the user interface and secure it to any object (e.g., a post, a wall, a lamp, the weld cable, etc.).

In some examples, the mount is fitted with rails to allow the user interface to move within a channel or tract, such that it be conveyed from a first surface (e.g., a lateral side) to a second surface (e.g., a top or bottom side), and/or set at an angle (e.g., by use of a set of pins about which the user interface may pivot). In some examples, the user interface and/or mount may be enclosed within a protective cover (e.g., a cage, a transparent box, etc.) to prevent environmental damage to the user interface while allowing the operator to adjust the position and retain the ability to view and/or access the user interface.

In some examples, the present disclosure may include a wire feeder system with a separate enclosure for a spool of wire. The enclosure for the spool of wire may be separate from and connectable to a portable wire feeder. The portable wire feeder may be significantly lighter than a conventional wire feeder, because the spool of wire is separated from the drive components. Accordingly, both the enclosure for the spool of wire and the wire feeder are easily portable. Additionally, new spools can be conveniently replaced when a welding spool is exhausted.

The wire feeder includes a user interface, a housing comprising a mount to receive the user interface, the user interface being secured to the mount by one or more non-permanent joints to allow the user interface to change an angle or a location of the user interface relative to a surface of the housing on which the user interface is secured, and one or more fasteners configured to allow adjustment of a tension on the user interface from the one or more non-permanent joints.

In some examples, the one or more fasteners comprises one or more of a screw, a bolt, a magnet, a strap, a snap-fit, a detent, a magnet, or a removable pin. In examples, the user interface comprises one or more of a control switch or a display. In some examples, a change in the angle or location of the user interface causes a change in an angle or a location of the control switch or the display of the user interface.

According to the present invention, the user interface is removable from the mount. In some examples, the user interface is configured to be removed from the wire feeder and incorporated with another welding-type system, the user interface configured to control the wire feeder or the welding-type system. In examples, the mount includes rails on which the user interface can move within the mount.

In some examples, the wire feeder is secured in an enclosure. In examples, the enclosure is located on a cart.

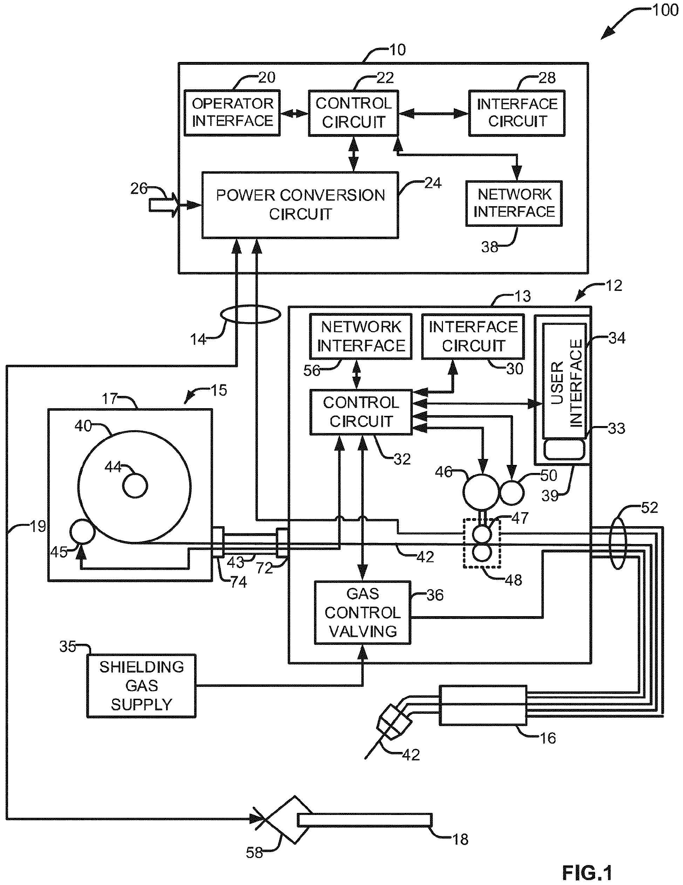

FIG. 1 illustrates a welding system 100 for performing welding operations. As shown in the welding system 100 of FIG. 1, a power supply 10 and a wire feeder 12 are coupled via conductors or conduits 14. In the illustrated example, the power supply 10 is separate from the wire feeder 12, such that the wire feeder 12 may be positioned near a welding location at some distance from the power supply 10. Terminals are typically provided on the power supply 10 and on the wire feeder 12 to allow the conductors 14 or conduits to be coupled to the systems so as to allow for power and gas to be provided to the wire feeder 12 from the power supply 10, and to allow data to be exchanged between the two devices.

The system 100 is configured to provide wire from a welding wire source 15, power from the power supply 12, and shielding gas from a shielding gas supply 35, to a welding tool or torch 16. The torch 16 may be any type of arc welding torch, (e.g., GMAW, GTAW, FCAW, SMAW) and may allow for the feed of a welding wire 42 (e.g., an electrode wire) and gas to a location adjacent to a workpiece 18. A work cable 19 is run to the welding workpiece 18 so as to complete an electrical circuit between the power supply 10 and the workpiece 18.

The welding system 100 is configured for weld settings (e.g., weld parameters, such as voltage, wire feed speed, current, gas flow, inductance, physical weld parameters, advanced welding programs, pulse parameters, etc.) to be selected by the operator and/or a welding sequence, such as via an operator interface 20 provided on the power supply 10. The operator interface 20 will typically be incorporated into a front faceplate of the power supply 10, and may allow for selection of settings such as the weld process, the type of wire to be used, voltage and current settings, and so forth. In particular, the example system 100 is configured to allow for welding with various steels, aluminums, or other welding wire that is channeled through the torch 16. Further, the system 100 is configured to employ welding wires with a variety of wire sizes. These weld settings are communicated to a control circuit 22 within the power supply 10. The system may be particularly adapted to implement welding regimes configured for certain electrode types. The control circuit 22 operates to control generation of welding power output that is supplied to the welding wire 42 for carrying out the desired welding operation.

The torch 16 applies power from the power supply 10 to the wire electrode 42, typically by a welding cable 52. Similarly, shielding gas from a shielding gas supply 35 is fed through the wire feeder 12 and the welding cable 52. During welding operations, the welding wire 42 is advanced through a jacket of the welding cable 52 towards the torch 16.

The work cable 19 and clamp 58 allow for closing an electrical circuit from the power supply 10 through the welding torch 16, the electrode (wire) 42, and the workpiece 18 for maintaining the welding arc during the operation. Although illustrated with a single torch 16 connected to the wire feeder 12, in some examples multiple torches of a variety of types may be connected to the wire feeder 12. In examples, a gouging or cutting torch may be separately connected to the wire feeder 12 and/or the power supply 10.

The control circuit 22 is coupled to power conversion circuit 24. This power conversion circuit 24 is adapted to create the output power, such as pulsed waveforms applied to the welding wire 42 at the torch 16. Various power conversion circuits may be employed, including choppers, boost circuitry, buck circuitry, inverters, converters, and/or other switched mode power supply circuitry, and/or any other type of power conversion circuitry. The power conversion circuit 24 is coupled to a source of electrical power as indicated by arrow 26. The power applied to the power conversion circuit 24 may originate in the power grid, although other sources of power may also be used, such as power generated by an engine-driven generator, batteries, fuel cells or other alternative sources. The power supply 10 illustrated in FIG. 1 may also include an interface circuit 28 configured to allow the control circuit 22 to exchange signals with the wire feeder 12.

The wire feeder 12 includes a complimentary interface circuit 30 that is coupled to the interface circuit 28. In some examples, multi-pin interfaces may be provided on both components and a multi-conductor cable run between the interface circuit to allow for such information as wire feed speeds, processes, selected currents, voltages or power levels, and so forth to be set on either the power supply 10, the wire feeder 12, or both. Additionally or alternatively, the interface circuit 30 and the interface circuit 28 may communicate wirelessly and/or via the weld cable.

The wire feeder 12 also includes control circuit 32 coupled to the interface circuit 30. As described below, the control circuit 32 allows for wire feed speeds to be controlled in accordance with operator selections or stored sequence instructions, and permits these settings to be fed back to the power supply via the interface circuit. The control circuit 32 is coupled to an operator interface 34 on the wire feeder that allows selection of one or more welding parameters, particularly wire feed speed. The operator interface may also allow for selection of such weld parameters as the process, the type of wire utilized, current, voltage or power settings, and so forth.

In some examples, the wire feeder 12 includes one or more power conversion circuits, which may be similar to power conversion circuit 24. For instance, the power conversion circuits in the wire feeder 12 may include choppers, boost circuitry, buck circuitry, inverters, converters, and/or other switched mode power supply circuitry, and/or any other type of power conversion circuitry to control power output to the welding torch 16 and/or other type of welding tool, as well as one or more auxiliary outputs.

The control circuit 32 may also be coupled to gas control valving 36 which regulates and/or measures the flow of shielding gas from the shielding gas supply 35 to the torch 16. In general, such gas is provided at the time of welding, and may be turned on immediately preceding the weld and for a short time following the weld. The shielding gas supply 35 may be provided in the form of pressurized bottles.

The wire feeder 12 includes components for feeding wire to the welding torch 16 and thereby to the welding operation, under the control of control circuit 32. As illustrated, the drive components and control components of the wire feeder 12 are included within a first housing or enclosure 13. A spool of wire 40 is mounted on a spool hub 44 in a second housing or enclosure 17. The wire source 15 may be integrated with the wire feeder 12. In some examples, the wire source 15 is physically independent from the wire feeder 12. In other words, the wire source 15 is connectable to and disconnectable from the wire feeder 12, and the wire source 15 can be physically moved independently from the wire feeder 12.

In some examples, the spool hub 40 is configured to support up to a sixty pound spool of wire and the enclosure 17 is large enough to enclose a sixty pound spool of wire. An inlet 72 of the wire feeder 12 is connected to an outlet 74 of the wire source 15 via one or more connectors 43. In some examples, the wire feeder inlet 72 is directly connected to the wire source outlet 74. For example, the wire feeder inlet 72 may include a first connector that directly connects to a second connector of the wire source outlet 74. For example, the wire feeder inlet 72 may connect to the wire source outlet 74 via quick disconnect connectors or the like through which wire from the spool 40 may be fed. In some examples, a conduit may connect the wire feeder inlet 72 to the wire source outlet 74. In some examples, the conduit is flexible (e.g., similar to a weld cable). In some examples, the conduit may be a rigid conduit. The connectors 43 enable welding wire 42 from the spool 40 to be fed to the drive components of the wire feeder 12. The connectors 43 may also enable one or more control cables to be connected from components within the wire source enclosure 17 to the control circuit 32.

Welding wire 42 is unspooled from the spool 40 and is progressively fed to the torch 16. The spool 40 may be associated with a clutch 45 that disengages the spool 40 when wire is to be fed from the spool 40 to the torch 16. The clutch 45 may also be regulated, for example by the control circuit 32, to maintain a minimum friction level to avoid free spinning of the spool 40. The first wire feeder motor 46 may be provided within a housing 48 that engages with wire feed rollers 47 to push wire from the wire feeder 12 towards the torch 16.

In practice, at least one of the rollers 47 is mechanically coupled to the motor 46 and is rotated by the motor 46 to drive the wire from the wire feeder 12, while the mating roller is biased towards the wire to apply adequate pressure by the two rollers to the wire. Some systems may include multiple rollers of this type. In some examples, the wire feeder 12 is configured to feed 1/8 inch wire. In some examples, the wire feeder 12 is configured to feed 3/32 inch wire.

A tachometer 50 or other sensor may be provided for detecting the speed of the first wire feeder motor 46, the rollers 47, or any other associated component so as to provide an indication of the actual wire feed speed. Signals from the tachometer 50 are fed back to the control circuit 32 such that the control circuit 32 can track the length of wire that has been fed. The length of wire may be used directly to calculate consumption of the wire and/or the length may be converted to wire weight based on the type of wire and its diameter.

In some examples, the user interface 34 is adaptable to variations in a position, orientation, or location of a respective welding system (e.g., wire feeder 12). For example, user interface 34 may be secured in a mount 39, such as by one or more fasteners 33. The mount 39 allows the user interface 34 to pivot (on one or more axis), extend from the housing 13 (at an angle and/or parallel to the surface from which it extends), and be removed from the mount 39 altogether.

A display and/or controls within the user interface 35 may be adaptable to changes in arrangement of the welding system. Although illustrated with a single user interface 34, two or more user interfaces may be employed, each adaptable as described herein. Further, although shown on a single surface (and in a single mount), multiple surfaces and/or mounts may be provided on the wire feeder 12. Further, power supply 10 may additionally or alternatively employ an adaptable user interface, as disclosed herein.

As disclosed herein, when the wire feeder is in a first location and/or orientation (e.g., arranged vertically and/or at an elevated height), the position, orientation, and/or location of user interface 34 may be changed to accommodate the operator's position in the work environment. Similarly, when the wire feeder is in a second location and/or orientation (e.g., arranged horizontally and/or at a reduced height), the position, orientation, and/or location of user interface 34 may be changed, as provided herein.

In some examples, the user interface 34 employs a configurable display (which may change orientation of displayed text and/or graphics in response to an adjustment in position, orientation, location, etc.), one or more physical controls (e.g., knobs, switches, membrane switches, etc.), and/or touch screen enabled controls. Thus, a change in orientation of the user interface 34 from a first position to a second position may make a first control and/or first display window appear to correspond to a second control and/or second display window (due to height, perspective, angle, etc.). Accordingly, the user interface 34 may reconfigure the display to correspond to the new perspective (such as automatically, in response to a sensor, and/or from a user input).

In some examples, the user interface 34 and/or mount 39 may be enclosed within a protective cover (e.g., a cage, a transparent box, etc.) to prevent environmental damage to the user interface 34 while allowing the operator to adjust the position and retain the ability to view and/or access the user interface.

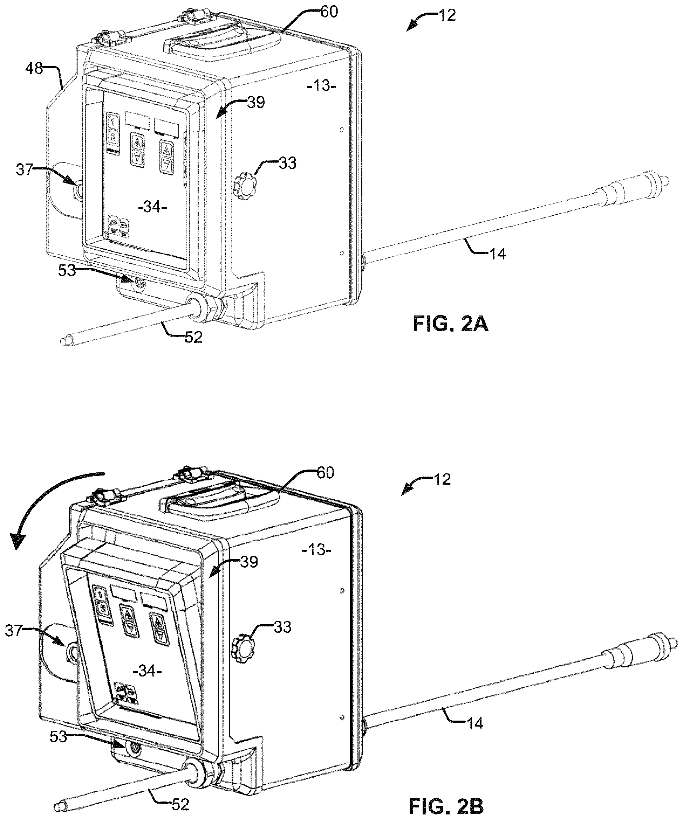

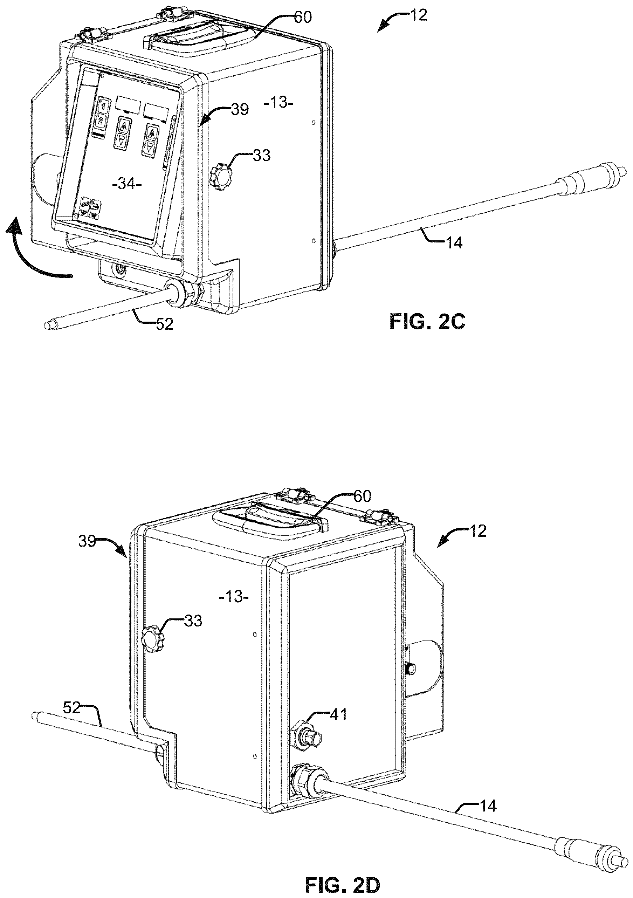

FIGS. 2A to 2D illustrate perspective views of an example wire feeder 12 with an adaptable user interface 34. The wire feeder 12 further includes a volt sense terminal 53, a shielding gas outlet 37, and/or a shielding gas inlet 41, . As shown, in FIG. 2B, the fastener 33 can be adjusted (such as by turning) to release tension on the user interface 34 within the mount 39. As such, the user interface 34 pivots and is angled downward. As shown in FIG. 2C, the user interface 34 pivots and is angled upward.

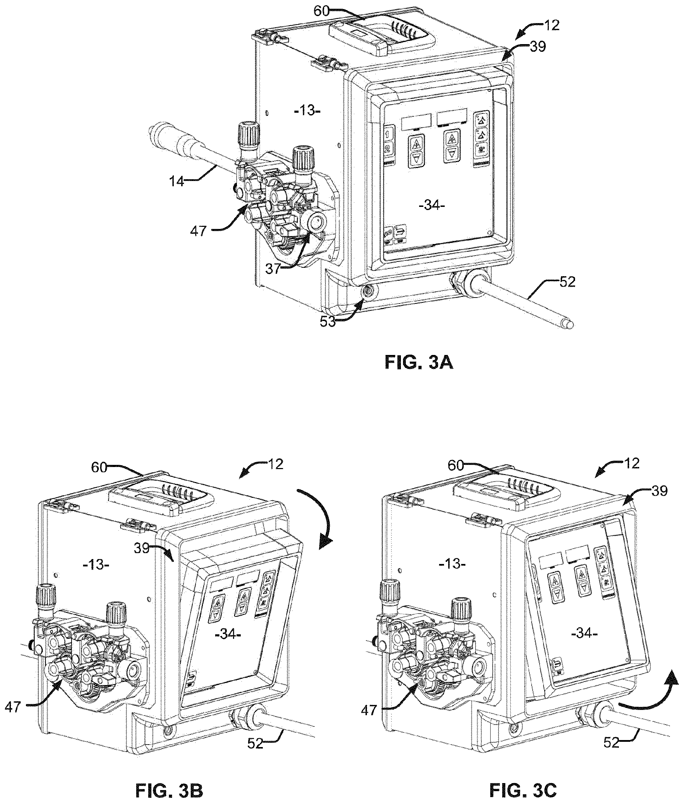

FIGS. 3A to 3C illustrate additional perspective views of an example wire feeder with an adaptable user interface, with FIG. 3B illustrating the user interface 34 pivoting downward, while FIG. 3C illustrates the user interface 34 pivoting upward.

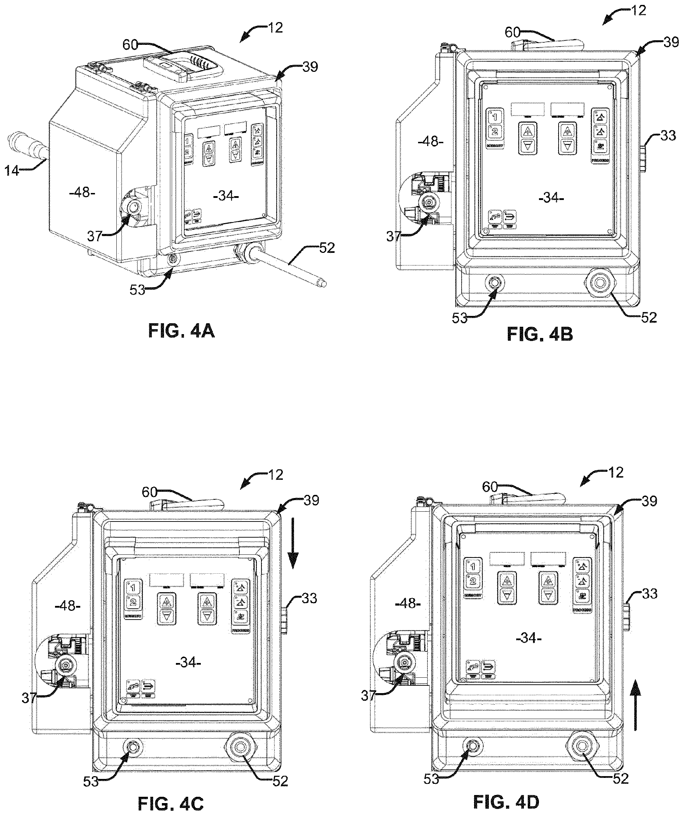

FIGS. 4A to 4D illustrate additional views generally of the front perspective of the example wire feeder 12. As shown, FIG. 4C illustrates the user interface 34 pivoting downward, while FIG. 4D illustrates the user interface 34 pivoting upward.

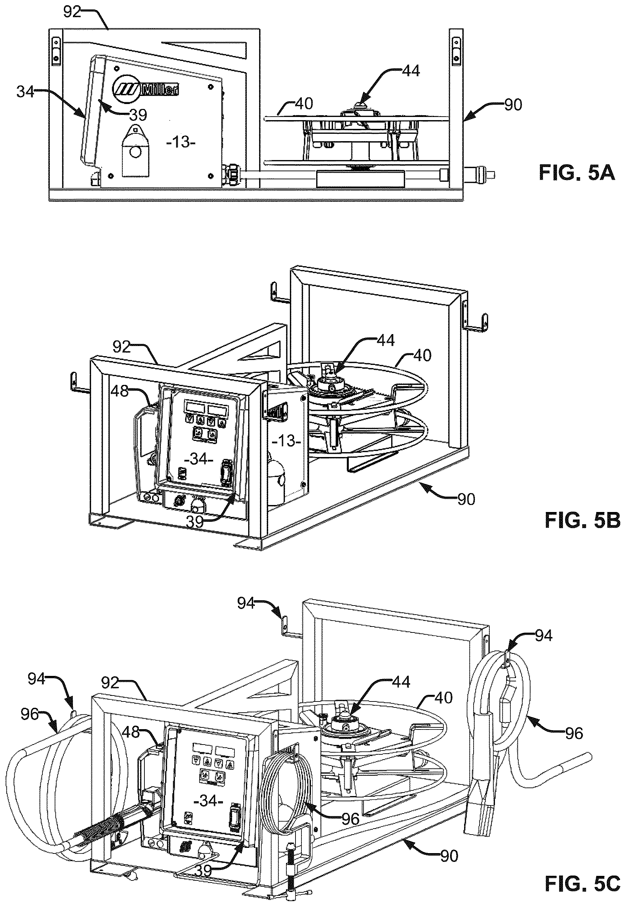

FIGS. 5A to 5C illustrate perspective views of the example wire feeder 12 with the adaptable user interface 34 mounted within an enclosure 90. In the example of FIGS. 5A to 5C, the wire feeder 12 and/or the enclosure 90 may be placed on a cart, along with a spool of wire 40, tools, etc. If the user interface was in a fixed orientation, the operator must be in a position to clearly see the front panel of the wire feeder 12. However, if the operator is performing a weld above or below a line of sight of the front panel, the operator would have to leave the work space in order to view and/or access the user interface.

As shown, the wire feeder 12 is protected within the enclosure 90 (e.g., by one or more beams/posts 92). The enclosure 90 further provides one or more hooks 94 for one or more tools or cables 96. However, the addition of the enclosure and/or tools may require more space and/or a relatively flat surface to secure the enclosure 90 to perform a welding operation, which may further limit the operator's field of view. Thus, the capability to change the position, orientation, and/or location of the user interface 34 provides specific advantages over rigid applications of a user interface.

## Claims

1. A wire feeder (12) comprising:
a user interface (34);
a housing (13) comprising a mount (39) to receive the user interface (34),
and the wire feeder (12) being **characterised in that**:
the user interface (34) being secured to the mount (39) by one or more non-permanent joints to allow the user interface (34) to change an angle or a location of the user interface (34) relative to a surface of the housing (13) on which the user interface (34) is secured; and
one or more fasteners (33) configured to allow adjustment of a tension on the user interface (34) from the one or more non-permanent joints; and
wherein the user interface (34) is removable from the mount (39).

2. The wire feeder (12) of claim 1, wherein the one or more fasteners (33) comprises one or more of a screw, a bolt, a magnet, a strap, a snap-fit, a detent, a magnet, or a removable pin.

3. The wire feeder (12) of claim 1, wherein the user interface (34) comprises one or more of a control switch or a display.

4. The wire feeder (12) of claim 3, wherein a change in the angle or location of the user interface (34) causes a change in an angle or a location of the control switch or the display of the user interface (34).

5. The wire feeder (12) of claim 1, wherein the user interface (34) is configured to be removed from the wire feeder (12) and incorporated with another welding-type system, the user interface (34) configured to control the wire feeder (12) or the welding-type system.

6. The wire feeder (12) of claim 1, wherein the mount includes rails on which the user interface (34) can move within the mount (39).

7. The wire feeder (12) of claim 1, wherein the wire feeder (12) is secured in an enclosure, and optionally wherein the enclosure is located on a cart.

8. The wire feeder (12) of claim 1, comprising
wherein the user interface (34) is secured to the mount (39) at one or more pivot points to allow an angle of the user interface (34) to change relative to the mount (39) on which the user interface (34) is secured; and
wherein one fastener (33) of one or more fasteners (33) is configured to occupy a first position and a second position, wherein the first position allows the user interface (34) to pivot about the one or more pivot points, and the second position fixes the angle of the user interface relative to the mount (39).

9. The wire feeder (12) of claim 8, wherein the fastener (33) comprises one or more of a screw, a bolt, a magnet, a strap, a snap-fit, a detent, a magnet, or a removable pin.

10. The wire feeder (12) of claim 8, wherein the user interface (34) comprises one or more of a control switch or a display, and
optionally wherein a change in the angle or location of the user interface (34) causes a change in an angle or a location of the control switch or the display of the user interface (34).

11. The wire feeder (12) of claim 8, wherein the user interface (34) is configured to be removed from the wire feeder (12) and incorporated with another welding-type system, the user interface (34) configured to control the wire feeder (12) or the welding-type system.

12. The wire feeder (12) of claim 8, wherein the wire feeder (12) is secured in an enclosure, and optionally wherein the enclosure is located on a cart.

## Patentansprüche

1. Drahtvorschub (12), aufweisend:
eine Benutzerschnittstelle (34);
ein Gehäuse (13), das eine Halterung (39) zur Aufnahme der Benutzerschnittstelle (34) aufweist,
und wobei der Drahtvorschub (12) **dadurch gekennzeichnet ist, dass**:
die Benutzerschnittstelle (34) durch eine oder mehrere nicht dauerhafte Gelenkverbindungen an der Halterung (39) befestigt ist, um der Benutzerschnittstelle (34) zu ermöglichen, einen Winkel oder eine Lage der Benutzerschnittstelle (34) in Bezug auf eine Oberfläche des Gehäuses (13), an dem die Benutzerschnittstelle (34) befestigt ist, zu verändern; und
ein oder mehrere Befestigungselemente (33) so konfiguriert sind, dass sie eine Anpassung einer Spannung auf die Benutzerschnittstelle (34) von der einen oder den mehreren nicht dauerhaften Gelenkverbindungen ermöglichen; und
wobei die Benutzerschnittstelle (34) von der Halterung (39) abnehmbar ist.

2. Drahtvorschub (12) nach Anspruch 1, wobei das eine oder die mehreren Befestigungselemente (33) eines oder mehrere von einer Schraube, einem Bolzen, einem Magneten, einem Band, einer Rastverbindung, einer Rastnase, einem Magneten oder einem entfernbaren Stift aufweisen.

3. Drahtvorschub (12) nach Anspruch 1, wobei die Benutzerschnittstelle (34) eines oder mehrere von einem Steuerschalter oder einer Anzeige aufweist.

4. Drahtvorschub (12) nach Anspruch 3, wobei eine Veränderung des Winkels oder der Lage der Benutzerschnittstelle (34) eine Veränderung eines Winkels oder einer Lage des Steuerschalters oder der Anzeige der Benutzerschnittstelle (34) bewirkt.

5. Drahtvorschub (12) nach Anspruch 1, wobei die Benutzerschnittstelle (34) konfiguriert ist, von dem Drahtvorschub (12) entfernt zu werden und in ein anderes Schweißsystem eingebaut zu werden, wobei die Benutzerschnittstelle (34) konfiguriert ist, den Drahtvorschub (12) oder das Schweißsystem zu steuern.

6. Drahtvorschub (12) nach Anspruch 1, wobei die Halterung Schienen beinhaltet, auf denen sich die Benutzerschnittstelle (34) innerhalb der Halterung (39) bewegen kann.

7. Drahtvorschub (12) nach Anspruch 1, wobei der Drahtvorschub (12) in einer Umhausung befestigt ist, und wobei die Umhausung optional auf einem Wagen angeordnet ist.

8. Drahtvorschub (12) nach Anspruch 1, aufweisend
wobei die Benutzerschnittstelle (34) an einem oder mehreren Schwenkpunkten an der Halterung (39) befestigt ist, um eine Veränderung eines Winkels der Benutzerschnittstelle (34) in Bezug auf die Halterung (39), an der die Benutzerschnittstelle (34) befestigt ist, zu ermöglichen; und
wobei ein Befestigungselement (33) von einem oder mehreren Befestigungselementen (33) so konfiguriert ist, dass es eine erste Position und eine zweite Position einnimmt, wobei die erste Position der Benutzerschnittstelle (34) ermöglicht, um den einen oder die mehreren Schwenkpunkte zu schwenken, und die zweite Position den Winkel der Benutzerschnittstelle in Bezug auf die Halterung (39) fixiert.

9. Drahtvorschub (12) nach Anspruch 8, wobei das Befestigungselement (33) eines oder mehrere von einer Schraube, einem Bolzen, einem Magneten, einem Band, einer Rastverbindung, einer Rastnase, einem Magneten oder einem entfernbaren Stift aufweist.

10. Drahtvorschub (12) nach Anspruch 8, wobei die Benutzerschnittstelle (34) eines oder mehrere von einem Steuerschalter oder einer Anzeige aufweist, und
wobei eine Veränderung des Winkels oder der Lage der Benutzerschnittstelle (34) optional eine Veränderung eines Winkels oder einer Lage des Steuerschalters oder der Anzeige der Benutzerschnittstelle (34) bewirkt.

11. Drahtvorschub (12) nach Anspruch 8, wobei die Benutzerschnittstelle (34) konfiguriert ist, von dem Drahtvorschub (12) entfernt zu werden und in ein anderes Schweißsystem eingebaut zu werden, wobei die Benutzerschnittstelle (34) konfiguriert ist, den Drahtvorschub (12) oder das Schweißsystem zu steuern.

12. Drahtvorschub (12) nach Anspruch 8, wobei der Drahtvorschub (12) in einer Umhausung befestigt ist, und wobei die Umhausung optional auf einem Wagen angeordnet ist.

## Revendications

1. Dispositif d'alimentation en fil (12), comprenant :
une interface utilisateur (34) ;
un boîtier (13) comprenant une monture (39) pour recevoir l'interface utilisateur (34),
et le dispositif d'alimentation en fil (12) étant **caractérisé en ce que** :
l'interface utilisateur (34) étant arrimée à la monture (39) par un ou plusieurs joints non permanents pour permettre à l'interface utilisateur (34) de modifier un angle ou un emplacement de l'interface utilisateur (34) par rapport à une surface du boîtier (13) sur lequel l'interface utilisateur (34) est arrimée ; et
un ou plusieurs éléments de fixation (33) configurés pour permettre le réglage d'une tension sur l'interface utilisateur (34) à partir des un ou plusieurs joints non permanents ; et
dans lequel l'interface utilisateur (34) est amovible de la monture (39).

2. Dispositif d'alimentation en fil (12) selon la revendication 1, dans lequel les un ou plusieurs éléments de fixation (33) comprennent un ou plusieurs parmi une vis, un boulon, un aimant, une sangle, un encliquetage, une détente, un aimant ou une broche amovible.

3. Dispositif d'alimentation en fil (12) selon la revendication 1, dans lequel l'interface utilisateur (34) comprend un ou plusieurs parmi un interrupteur de commande ou un affichage.

4. Dispositif d'alimentation en fil (12) selon la revendication 3, dans lequel une modification de l'angle ou de l'emplacement de l'interface utilisateur (34) provoque une modification d'un angle ou d'un emplacement de l'interrupteur de commande ou de l'affichage de l'interface utilisateur (34).

5. Dispositif d'alimentation en fil (12) selon la revendication 1, dans lequel l'interface utilisateur (34) est configurée pour être amovible du dispositif d'alimentation en fil (12) et incorporée avec un autre système de type soudage, l'interface utilisateur (34) étant configurée pour commander le dispositif d'alimentation en fil (12) ou le système de type soudage.

6. Dispositif d'alimentation en fil (12) selon la revendication 1, dans lequel la monture comporte des rails sur lesquels l'interface utilisateur (34) peut se déplacer au sein de la monture (39).

7. Dispositif d'alimentation en fil (12) selon la revendication 1, dans lequel le dispositif d'alimentation en fil (12) est arrimé dans une enceinte, et facultativement dans lequel l'enceinte est située sur un chariot.

8. Dispositif d'alimentation en fil (12) selon la revendication 1, comprenant
dans lequel l'interface utilisateur (34) est arrimée à la monture (39) en un ou plusieurs points de pivotement pour permettre la modification d'un angle de l'interface utilisateur (34) par rapport à la monture (39) sur laquelle l'interface utilisateur (34) est arrimée ; et
dans lequel un élément de fixation (33) parmi un ou plusieurs éléments de fixation (33) est configuré pour occuper une première position et une deuxième position, dans lequel la première position permet à l'interface utilisateur (34) de pivoter autour des un ou plusieurs points de pivotement, et la deuxième position fixe l'angle de l'interface utilisateur par rapport à la monture (39).

9. Dispositif d'alimentation en fil (12) selon la revendication 8, dans lequel l'élément de fixation (33) comprend un ou plusieurs parmi une vis, un boulon, un aimant, une sangle, un encliquetage, une détente, un aimant ou une broche amovible.

10. Dispositif d'alimentation en fil (12) selon la revendication 8, dans lequel l'interface utilisateur (34) comprend un ou plusieurs parmi un interrupteur de commande ou un affichage, et
facultativement, dans lequel une modification de l'angle ou de l'emplacement de l'interface utilisateur (34) provoque une modification d'un angle ou d'un emplacement de l'interrupteur de commande ou de l'affichage de l'interface utilisateur (34).

11. Dispositif d'alimentation en fil (12) selon la revendication 8, dans lequel l'interface utilisateur (34) est configurée pour être amovible du dispositif d'alimentation en fil (12) et incorporée avec un autre système de type soudage, l'interface utilisateur (34) étant configurée pour commander le dispositif d'alimentation en fil (12) ou le système de type soudage.

12. Dispositif d'alimentation en fil (12) selon la revendication 8, dans lequel le dispositif d'alimentation en fil (12) est arrimé dans une enceinte, et facultativement dans lequel l'enceinte est située sur un chariot.
